(19) Europäisches Patentamt / European Patent Office / Office européen des brevets

(11) **EP 4 624 197 A1**

(12) **EUROPEAN PATENT APPLICATION**

(43) Date of publication:
01.10.2025 Bulletin 2025/40

(21) Application number: 25164414.2

(22) Date of filing: 18.03.2025

(51) International Patent Classification (IPC):
*B60C 1/00* *(2006.01)* *C08L 7/00* *(2006.01)*
*C08L 23/283* *(2025.01)*

(52) Cooperative Patent Classification (CPC):
(C-Sets available)
**C08L 7/00; B60C 1/0008; C08L 23/283** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 JP 2024054480**

(71) Applicant: **Sumitomo Rubber Industries Ltd.**
**Kobe-shi, Hyogo 651-0072 (JP)**

(72) Inventor: **Mizoue, Yoko**
**Hyogo (JP)**

(74) Representative: **Forresters IP LLP**
**Skygarden**
**Erika-Mann-Straße 11**
**80636 München (DE)**

(54) **TIRE**

(57) Provided is a tire having improved durability while taking environmental load into consideration by using a recovered carbon black. The tire is a tire comprising a tire member composed of a rubber composition, the rubber composition comprising a rubber component and carbon black, the carbon black having an average primary particle size of 50.0 nm or less, the carbon black comprising a recovered carbon black, wherein $A_{CB}$, $D_{CB}$, and T satisfy the following inequality, where $A_{CB}$ represents a content, in parts by mass, of the carbon black based on 100 parts by mass of the rubber component, $D_{CB}$ represents an average primary particle size, in nm, of the carbon black, and T represents the maximum thickness, in mm, of the tire member:

$$(1) \quad (A_{CB} \times D_{CB})/T < 4500.$$

EP 4 624 197 A1

(52) Cooperative Patent Classification (CPC): (Cont.)

C-Sets
**C08L 7/00, C08L 9/00, C08L 91/00, C08L 57/02,
C08K 3/22, C08K 5/09, C08K 3/06, C08K 3/06,
C08K 5/47;
C08L 7/00, C08L 15/00, C08L 91/00, C08L 57/02,
C08K 3/22, C08K 5/09, C08K 3/06, C08K 3/06,
C08K 5/47;
C08L 23/283, C08L 23/0838, C08L 57/02,
C08L 91/00, C08K 3/22, C08K 5/09, C08K 3/06,
C08K 3/06, C08K 5/47;
C08L 23/283, C08L 23/0838, C08L 91/00,
C08L 57/02, C08K 3/22, C08K 5/09, C08K 3/06,
C08K 3/06, C08K 5/47**

**Description**

TECHNICAL FIELD

The present invention relates to a tire.

BACKGROUND OF THE INVENTION

There has been a growing demand for consideration of environmental load year by year across all industries. Regarding a tire, attempts have been made to reuse used raw materials. Regarding carbon black, carbon black obtained by pyrolysis of used tires (recovered carbon black) is known. It has been estimated that switching from a regular carbon black to a recovered carbon black would reduce emissions of carbon dioxide during a producing step of carbon black by 80% or more. According to this estimation, replacing just 10% of the regular carbon black with the recovered carbon black would reduce annual global $CO_2$ emissions by 2.7 million tons.

Regarding carbon black that is a high-end material, EP 3173251 A discloses that, as a part of a regular carbon black, a recovered carbon black is used, which recovered carbon black is obtained by pyrolysis of a used tire, with the surface of the recovered carbon black supplemented with a hydroxyl group or a carboxyl group.

SUMMARY OF THE INVENTION

It is an object of the present invention to provide a tire having improved durability while taking environmental load into consideration by using a recovered carbon black.

The present invention relates to a tire below:

a tire comprising a tire member composed of a rubber composition,
the rubber composition comprising a rubber component and carbon black,
the carbon black having an average primary particle size of 50.0 nm or less,
the carbon black comprising a recovered carbon black,
wherein $A_{CB}$, $D_{CB}$, and T satisfy the following inequality, where $A_{CB}$ represents a content, in parts by mass, of the carbon black based on 100 parts by mass of the rubber component, $D_{CB}$ represents an average primary particle size, in nm, of the carbon black, and T represents the maximum thickness, in mm, of the tire member:

$$(1)\ (A_{CB} \times D_{CB})/T < 4500.$$

According to the present invention, a tire can be provided which has improved durability while taking environmental load into consideration by using a recovered carbon black.

BRIEF DESCRIPTION OF THE DRAWINGS

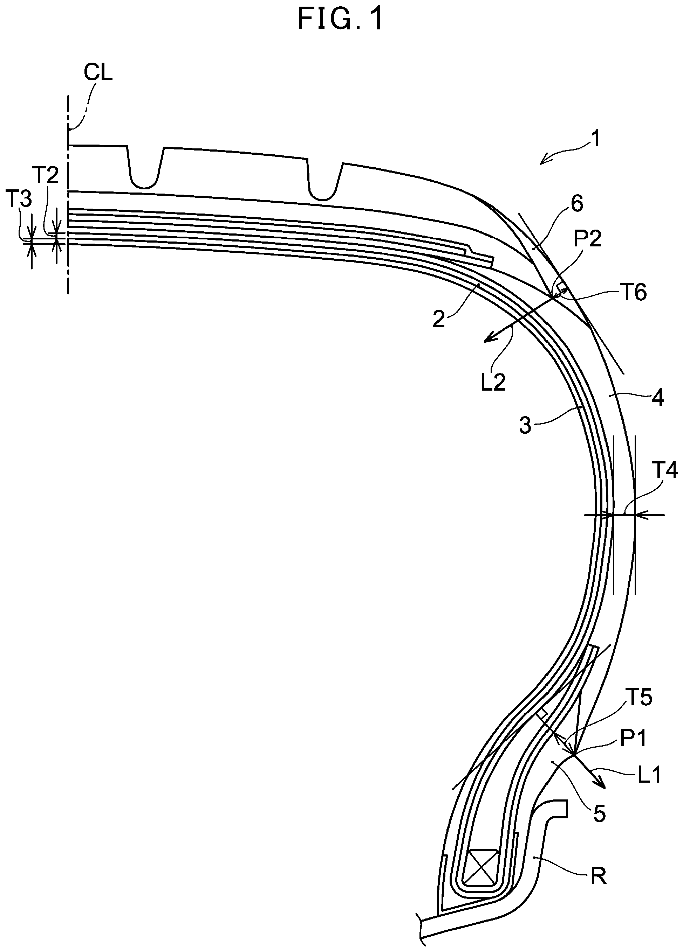

FIG. 1 is a schematic view showing a part of a cross section (upper right part of the cross section) taken along a plane including a tire rotation axis of a tire relating to one embodiment of the present invention.

DETAILED DESCRIPTION

The tire of the present embodiment is a tire comprising a tire member composed of a rubber composition, the rubber composition comprising a rubber component and carbon black, the carbon black having an average primary particle size of 50.0 nm or less, the carbon black comprising a recovered carbon black, wherein $A_{CB}$, $D_{CB}$, and T satisfy the following inequality, where $A_{CB}$ represents a content, in parts by mass, of the carbon black based on 100 parts by mass of the rubber component, $D_{CB}$ represents an average primary particle size, in nm, of the carbon black, and T represents the maximum thickness, in mm, of the tire member:

$$(1)\ (A_{CB} \times D_{CB})/T < 4500.$$

Although it is not intended to be bound by a theory, the following can be considered as a mechanism by which the tire of the present embodiment improves in durability while taking environmental load into consideration by using a recovered carbon black. That is, (1) a recovered carbon black obtained by pyrolysis of a used tire has a lower surface reactivity than a regular carbon black, and therefore its physical bonding power in a rubber composition is reduced, but by reducing a particle size of carbon black comprising a recovered carbon black and increasing a specific surface area thereof, the physical bonding power with a polymer is improved, which is considered to contribute to improvement in reinforcing strength. Moreover, (2) from the viewpoint of reinforcing property, there is a relation in that, by reducing the particle size of carbon black comprising the recovered carbon black, it becomes possible to reduce an amount of carbon black used, while, by increasing a thickness of a member, it becomes possible to further improve reinforcing property. Thus, it is considered that setting a value obtained by dividing a product of the amount of carbon black used and the particle size by the maximum thickness of the tire member at or below a certain value contributes to maintenance and improvement in reinforcing strength. Then, it is considered that, with cooperation of the above-described (1) and (2), an extremely excellent effect of improving durability of the tire while taking environmental load into consideration by using the recovered carbon black is obtained.

The right side in the inequality (1) is preferably 3000.

It is considered that the effects of the invention become more easily exhibited by satisfying the inequality (1) with a stricter condition.

The $A_{CB}$ is preferably 20 or more and 100 or less.

The $D_{CB}$ is preferably 47.0 nm or less.

By reducing the particle size of carbon black and increasing the specific surface area thereof, the physical bonding power with the polymer is improved, which is considered to contribute to improvement in reinforcing strength.

The tire member is preferably an inner liner.

The tire member is preferably an insulation.

<Definition>

A "standardized state" is a state where a tire is rim-assembled on a standardized rim and air under a standardized internal pressure is filled, and no load is applied.

A "dimension of each part of a tire" is, for one appearing on the outer surface of the tire, a value specified in a standardized condition unless otherwise specified, while it is, for one present inside the tire or on a tire cutting surface, a value specified in a condition where, for example, the tire is cut on a plane including a tire rotation axis and the cut tire piece is held to a rim width of a standardized rim.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity WL" is calculated by the following equations. Wherein "V" is a virtual volume, in $mm^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt/2)^2 - (Dt/2 - Ht)^2\} \times \pi \times Wt$$

A "recovered carbon black" refers to carbon black obtained from a pyrolysis process for a product such as a used tire and the like comprising carbon black, in which, when the product is subjected to oxidative combustion by heating in the air, using a thermal weight measuring method according to JIS K 6226-2:2003, a ratio of a mass of ash (ash content), which is a component that does not combust, is 13% by mass or more. That is, a mass (carbon amount) of a weight loss content due to the oxidative combustion is 87% by mass or less. The recovered carbon black is also referred to as a recycled carbon or a recycled carbon black and may be expressed as rCB.

The "maximum thickness of a tire member" is the maximum thickness, in mm, of the tire member on a cross section of the tire taken along a plane including a tire rotation axis. The maximum thickness is measured by preparing a tire piece obtained by cutting the tire along the plane including the tire rotation axis, with a space between beads of the tire piece held to a standardized rim width. The maximum thickness shall be an average value of respective thicknesses measured at five locations by rotating the tire by 72°.

When thicknesses of tire members are substantially uniform on the cross section of the tire, a thickness at a predetermined location shall be the maximum thickness of the tire member. That is, (1) for members whose thicknesses in a tire radial direction can be recognized on a tire center line, the above-described thickness is regarded as the maximum thickness, and (2) among tire members whose thicknesses cannot be recognized as described in (1), for members whose thicknesses can be recognized at the tire maximum width position in a tire rotation axis direction, the above-described thickness is regarded as the maximum thickness. Examples of the tire members as described in (1) include a tread, a full band, a belt, a carcass, an insulation, an inner liner, and the like, and examples of the tire members as described in (2) include a sidewall and the like.

On the other hand, when thicknesses of tire members vary on the cross section of the tire, the maximum thickness is determined taking into consideration a normal thickness recognition method for the tire members. Examples of such tire members include a clinch, a wing, and the like.

The "maximum thickness of an insulation" is a thickness in a tire radial direction on a tire center line on a cross section of a tire taken along a plane including a tire rotation axis. It corresponds to T2 in FIG. 1.

The "maximum thickness of an inner liner" is a thickness in a tire radial direction on a tire center line on a cross section of a tire taken along a plane including a tire rotation axis. It corresponds to T3 in FIG. 1.

The "maximum thickness of a sidewall" is a thickness at the tire maximum width position in a tire rotation axis direction on a cross section of a tire taken along a plane including a tire rotational axis. It corresponds to T4 in FIG. 1.

The "maximum thickness of a clinch" is a thickness measured along a normal line of a main body of a carcass that passes through a point where a sidewall and the clinch come into contact with each other on an outer surface of a tire. In FIG. 1, P1 is a point where the sidewall and the clinch come into contact with each other on the outer surface of the tire, L1 is a normal line of the main body of the carcass that passes through the point P1, and T5 is the maximum thickness of the clinch as measured along the normal line L1.

The "maximum thickness of a wing" is a thickness measured along a normal line of an outer surface of a tire that passes through a point where a contour line of a tread on an outer side in a tire width direction intersects with a contour line of a sidewall on the outer side in the tire radial direction. In FIG. 1, P2 is a point where the contour line of the tread on the outer side in the tire width direction intersects with the contour line of the sidewall on the outer side in the tire radial direction, L2 is a normal line of the outer surface of the tire that passes through the point P2, and T6 is the maximum thickness of the wing as measured along the normal line L2.

<Measuring method>

A "styrene content" is calculated by pyrolysis gas chromatography or NMR measurement ($^1$H-NMR or $^{13}$C-NMR). Unlike physical property values such as a complex elastic modulus (E*) and the like, amounts of components such as the "styrene content" have true values that are independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase components generated by this heating using a separation column, and analyzing each separated component.

A "vinyl content (1,2-bond butadiene unit amount)" is calculated by pyrolysis gas chromatography or NMR measurement ($^1$H-NMR or $^{13}$C-NMR). Similarly with the "styrene content", a "vinyl content" has true values that are independent of a measuring method, so it is preferable to use a measuring method with as high accuracy as possible.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has true values that are independent of a measuring method, so it is preferable to use a measuring method with as high accuracy as possible.

An "ash content of a recovered carbon black" is measured by a thermal weight measurement method according to JIS K 6226-2:2003.

An "average primary particle size of carbon black" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of $\{4 \times \text{(area of particle)}/\pi\}$) is calculated from the microscope image to be defined as a particle size. The definitions are applied to carbon black comprising a recovered carbon black.

A "nitrogen adsorption specific surface area ($N_2SA$) of carbon black" is measured according to JIS K 6217-2:2017.

A "nitrogen adsorption specific surface area ($N_2SA$) of silica" is a value measured by a BET method according to ASTM D3037-93.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "softening point of resin" is a temperature at which a sphere drops when the softening point specified in JIS K 6220-1:2015 7.7 is measured with a ring and ball softening point measuring device.

<Tire>

The tire relating to the present embodiment will be described below with reference to the drawings as appropriate. However, the drawings are merely examples for explanation.

The tire relating to the present embodiment is a tire comprising a tire member composed of a predetermined rubber composition, wherein $A_{CB}$, $D_{CB}$, and $T$ satisfy the following inequality, where $A_{CB}$ represents a content, in parts by mass, of carbon black based on 100 parts by mass of a rubber component in the rubber composition, $D_{CB}$ represents an average primary particle size, in nm, of the carbon black, and $T$ represents the maximum thickness, in mm, of the tire member:

$$(1)\ (A_{CB} \times D_{CB})/T < 4500.$$

FIG. 1 is a schematic view showing a part of a cross section (upper right part of the cross section) of a tire relating to the present embodiment, taken along a plane including a tire rotation axis. In FIG. 1, an insulation 2, an inner liner 3, a sidewall 4, a clinch 5, and a wing 6 of a tire 1 are shown. Moreover, the maximum thickness of the insulation 2 is denoted by T2, the maximum thickness of the inner liner 3 is denoted by T3, the maximum thickness of the sidewall 4 is denoted by T4, the maximum thickness of the clinch 5 is denoted by T5, and the maximum thickness of the wing 6 is denoted by T6.

(Inequality (1))

In the inequality (1), a value on the right side is preferably 4000, more preferably 3800, further preferably 3700, further preferably 3500, further preferably 3000, further preferably 2800, further preferably 2600. On the other hand, a lower limit of a value of $(A_{CB} \times D_{CB})/T$ on the left side is not particularly limited from the viewpoint of the effects of the invention, but it may be, for example, 500, 800, or 1,000.

$A_{CB}$ is a total content of carbon black comprising a recovered carbon black, which is, for example, preferably 20 parts by mass or more, more preferably greater than 20 parts by mass, further preferably greater than 30 parts by mass, further preferably greater than 40 parts by mass, further preferably greater than 50 parts by mass, further preferably greater than 60 parts by mass, further preferably greater than 70 parts by mass, based on 100 parts by mass of the rubber component. On the other hand, the total content is preferably less than 150 parts by mass, more preferably less than 120 parts by mass, further preferably 110 parts by mass or less, further preferably 100 parts by mass or less, further preferably less than 100 parts by mass. When the content of carbon black is within the above-described ranges, a sufficient reinforcing property and a good dispersibility in a rubber tend to be obtained.

$D_{CB}$ is an average primary particle size of carbon black comprising a recovered carbon black, which is 50.0 nm or less. When the average primary particle size is greater than 50.0 nm, a sufficient durability cannot be obtained. The average primary particle size is preferably less than 50.0 nm, more preferably less than 48.0 nm, further preferably 47.0 nm or less, further preferably less than 46.0 nm, further preferably 45.0 nm or less, further preferably less than 40.0 nm, further preferably less than 39.0 nm, further preferably less than 38.0 nm, further preferably less than 37.0 nm, further preferably less than 36.0 nm, further preferably less than 35.0 nm, further preferably less than 32.0 nm. On the other hand, a lower limit of the average primary particle size is not particularly limited from the viewpoint of the effects of the present invention, but it is, for example, 20 nm or more. Besides, the average primary particle size of carbon black is measured by the above-described measuring method.

T is the maximum thickness of a tire member, which is preferably 0.10 mm or more, more preferably 0.20 mm or more, further preferably 0.30 mm or more, further preferably 0.50 mm or more, further preferably 0.70 mm or more, further preferably 0.75 mm or more, further preferably 0.80 mm or more, further preferably 0.90 mm or more, further preferably 1.00 mm or more, from the viewpoint of durability. On the other hand, an upper limit of the maximum thickness is not particularly limited, and it can be naturally determined for each tire member. For example, when the tire member is an inner liner, the maximum thickness thereof is preferably 1.5 mm or less. Moreover, when the tire member is an insulation, the maximum thickness thereof is preferably 1.5 mm or less.

Among the variables constituting the left side in the inequality (1), $A_{CB}$ is a content, in parts by mass, of carbon black based on 100 parts by mass of the rubber component in the rubber composition, and therefore it can be adjusted by increasing or decreasing a compounding amount of carbon black, particularly, when multiple types of carbon black are compounded, a total amount thereof. Moreover, $D_{CB}$ is an average primary particle size, in nm, of carbon black, and therefore it can be adjusted by selecting an average primary particle size of carbon black to be compounded, and particularly, when multiple types of carbon black with different average primary particle sizes are compounded, it can also be adjusted by changing a compounding ratio thereof. Furthermore, T is the maximum thickness of a tire member, and therefore it can be adjusted by increasing or decreasing the maximum thickness of the tire member. Then, by adjusting these $A_{CB}$, $D_{CB}$, and T, respectively, the value of $(A_{CB} \times D_{CB})/T$ on the left side in the inequality (1) can be adjusted.

<Rubber composition>

A rubber composition constituting a tire member will be described below. In the present embodiment, examples of the tire member include various tire members such as a tread, a full band, a belt, a carcass, an insulation, an inner liner, a sidewall, a clinch, a wing, and the like. Among them, an inner liner, an insulation, and the like are preferable as the tire members.

Each of the rubber compositions constituting these tire members is a rubber composition in which the rubber composition comprises a rubber component and carbon black, the carbon black has an average primary particle size of 50.0 nm or less, and the carbon black comprises a recovered carbon black.

An amount of the recovered carbon black based on 100% by mass of carbon black is not particularly limited, and carbon black has only to at least comprise the recovered carbon black. The reason is as follows. Namely, a large content of the recovered carbon black can contribute significantly to suppression of $CO_2$ emissions although it reduces the physical bonding power of carbon black in the rubber composition, whereas a small content of the recovered carbon black does not reduce the physical bonding power of carbon black in the rubber composition so much although it reduces the contribution to suppression of $CO_2$ emissions. Then, in either case, by satisfying the requirements of the present invention, durability can be improved depending on respective circumstances while taking environmental load into consideration by using the recovered carbon black.

The content of the recovered carbon black based on 100% by mass of carbon black is, for example, preferably 1% by mass or more, more preferably 5% by mass or more, further preferably 10% by mass or more, further preferably 20% by mass or more, further preferably 30% by mass or more, further preferably 40% by mass or more, further preferably 50% by mass or more. The content may be 100% by mass.

[Rubber composition constituting inner liner]

A rubber composition constituting an inner liner will be described.

(Rubber component)

The rubber component preferably comprises a butyl-based rubber. In this case, the rubber component can comprise rubber components other than the butyl-based rubber. Examples of the rubber components other than the butyl-based rubber include diene-based rubbers and non-diene-based rubbers. As the diene-based rubbers, an isoprene-based rubber (IR-based rubber), a styrene-butadiene rubber (SBR), and a butadiene rubber (BR), which are described below, can be used in the same manner, and further, a styrene-isoprene-butadiene rubber (SIBR), a chloroprene rubber (CR), an acrylonitrile-butadiene rubber (NBR), and the like can also be used. As the non-diene-based rubbers, an ethylene-propylene rubber, a polynorbornene rubber, a silicone rubber, a polyethylene chloride rubber, a fluorine rubber (FKM), an acrylic rubber (ACM), a hydrin rubber, and the like can be used. Rubber components synthesized from recycled-derived and biomass-derived raw materials, which are described below, can also be used in the same manner. The butyl-based rubber, the rubber components other than the butyl-based rubber, the diene-based rubbers, and the non-diene-based rubbers may be used alone, or two or more thereof may be used in combination, respectively.

<<Butyl-based rubber>>

As the butyl-based rubber, a polymer comprising an isobutylene unit and an isoprene unit as repeating units and a derivative thereof are preferable, and examples of such a butyl-based rubber include a butyl rubber (IIR); a halogenated butyl rubber such as a brominated butyl rubber (Br-IIR), a chlorinated butyl rubber (Cl-IIR), and the like; and the like. Among them, a halogenated butyl rubber is preferable, and a brominated butyl rubber and a chlorinated butyl rubber are more preferable, from the viewpoint that sheet processability and air barrier property can be improved with a good balance. The butyl-based rubber can be used alone, or two or more thereof can be used in combination.

As the butyl-based rubber, recycled butyl-based rubbers, as well as normal butyl-based rubbers (butyl-based rubbers other than recycled butyl-based rubbers), can be used in combination. The recycled butyl-based rubber usually has a large content of a non-halogenated butyl rubber (regular butyl rubber), and therefore, by using it in combination with a halogenated butyl rubber, good air barrier property and vulcanization rate can be secured. The recycled butyl-based rubber may be used alone, or two or more thereof may be used in combination.

As the butyl-based rubber, for example, products from Exxon Mobil Corporation, ENEOS Materials Corporation, ARLANXEO, JSR Corporation, Japan Butyl Co., Ltd., etc. can be used.

A content of a butyl-based rubber in 100% by mass of the rubber component is preferably greater than 70% by mass, more preferably greater than 75% by mass, further preferably 80% by mass or more, particularly preferably 90% by mass or more, from the viewpoint of a sufficient air barrier property. The content of the butyl-based rubber may be 100% by mass.

(Filler)

A filler comprises carbon black. Moreover, the carbon black comprises a recovered carbon black (rCB). Furthermore, the filler may comprise fillers other than carbon black, and examples of such fillers include those conventionally and commonly used in the tire industry such as aluminum hydroxide, calcium carbonate, alumina, clay, talc, and the like, in addition to silica. The filler may be one comprising carbon black and silica, may be one consisting of carbon black and silica, or may be one consisting of carbon black.

<<Recovered carbon black>>

In the present specification, a "recovered carbon black" refers to carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis of an organic material at 550 to 800°C, excluding oxygen, or by vacuum pyrolysis at a relatively low temperature ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193). Thus, it is considered that the recovered carbon black has a low surface reactivity and therefore its physical bonding power in the rubber composition is reduced.

The recovered carbon black may lack a functional group on its surface or may be treated so that its surface comprises a functional group. The treatment performed so that the surface of the recovered carbon black comprises a functional group can be implemented by a conventional method. For example, in EP 3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group. The recovered carbon black may be used alone, or two or more thereof may be used in combination.

<<Carbon black other than recovered carbon black>>

Examples of carbon black other than a recovered carbon black include, but not particularly limited to, N134, N110, N220, N234, N219, N339, N330, N326, N351, N550, N762, and the like. A raw material of carbon black may be a biomass material such as lignin, a vegetable oil, and the like, from the viewpoint of life cycle assessment. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Carbon Co. Ltd., Columbia Chemical Corporation, etc. can be used. Carbon black may be used alone, or two or more thereof may be used in combination.

An average primary particle size of carbon black ($D_{CB}$) comprising a recovered carbon black and a total content of carbon black comprising a recovered carbon black ($A_{CB}$) are as described above.

A nitrogen adsorption specific surface area ($N_2SA$) of carbon black comprising a recovered carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint of obtaining a sufficient reinforcing property and a good abrasion resistance. Moreover, an upper limit of the $N_2SA$ is preferably less than 300 $m^2/g$ from the viewpoints of an excellent dispersibility and unlikeliness for heat generation. Besides, the $N_2SA$ of the recovered carbon black in the present specification is a value measured by the above-described method.

<<Silica>>

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. Silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 50 $m^2/g$, more preferably greater than 100 $m^2/g$, further preferably greater than 150 $m^2/g$, further preferably greater than 170 $m^2/g$. Moreover, an upper limit of the $N_2SA$ of silica is, but not particularly limited to, preferably less than 350 $m^2/g$, more preferably less than 250 $m^2/g$, further preferably less than 200 $m^2/g$. When it is within the above-described ranges, cut resistance tends to be improved. Besides, the $N_2SA$ of silica is a value measured by the above-described method.

A content of silica when compounded based on 100 parts by mass of the rubber component is, but not particularly limited to, preferably greater than 1 part by mass, more preferably greater than 5 parts by mass, more preferably greater than 10 parts by mass, further preferably greater than 20 parts by mass, from the viewpoint of securing fuel efficiency and ride comfort. Moreover, the content is preferably less than 150 parts by mass, more preferably less than 100 parts by mass, further preferably less than 50 parts by mass, further preferably less than 30 parts by mass, from the viewpoints of dispersibility of silica and processability.

<<Silane coupling agent>>

When silica is used, it is preferable that the rubber composition further comprises a silane coupling agent. The silane coupling agent is not particularly limited, examples of which include, for example, sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, 3-triethoxysilylpropyl methacrylate monosulfide, and the like; mercapto-based silane coupling agents such as 3-mercaptopropyltrimethoxysilane, 2-mercaptoethyltriethoxysilane, NXT and NXT-Z manufactured by Momentive Performance Materials, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. As commercially available products, products from Evonik Industries AG, Momentive Performance Materials, Shin-Etsu Chemical Co., Ltd., Tokyo Chemical Industry Co., Ltd., AZmax.co, Dow Corning Toray Co., Ltd., etc. can be used. The silane coupling agent may be used alone, or two or more thereof may be used in combination.

A content of a silane coupling agent when compounded is preferably greater than 1 part by mass, more preferably greater than 3 parts by mass, further preferably greater than 5 parts by mass, further preferably greater than 7 parts by mass, based on 100 parts by mass of silica. On the other hand, the content is preferably less than 20 parts by mass, more preferably less than 18 parts by mass, further preferably less than 16 parts by mass, further preferably less than 14 parts by mass. When it is within the above-described ranges, dispersibility of silica tends to be improved.

(Other compounding agents)

The rubber composition can appropriately comprise compounding agents conventionally and commonly used in the tire industry, for example, a plasticizing agent, a compatibilizer, processing aid, a vulcanized rubber particle, wax, stearic acid, zinc oxide, an antioxidant, a vulcanizing agent, a vulcanization accelerator, and the like, in addition to the rubber components and the fillers.

<<Plasticizing agent>>

The plasticizing agent is a material that imparts plasticity to the rubber component, and has a concept that includes both a plasticizing agent in a liquid state at 25°C and a plasticizing agent that is solid at 25°C. Examples of the plasticizing agent include resin, oil, a liquid polymer, an ester-based plasticizing agent, and the like. These plasticizing agents may be petroleumderived ones, biomass-derived ones, or naphtha-derived ones recycled from rubber products or non-rubber products. Moreover, low-molecular-weight hydrocarbon components obtained by pyrolyzing used tires or products containing these agents and performing extraction from the pyrolysate may be used as plasticizing agents. The plasticizing agent may be used alone, or two or more thereof may be used in combination.

· Oil

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition containing triacylglycerol is immersed at normal temperature (25°C) for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of $\pm 0.10$ ppm.

The above-described fatty acid is not particularly limited, and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, an oleyl alcohol that can be derived therefrom, and the like.

A content of oil based on 100 parts by mass of the rubber component is preferably greater than 1 part by mass, more preferably greater than 2 parts by mass, further preferably 3 parts by mass or more. Moreover, the content is preferably less than 20 parts by mass, more preferably less than 15 parts by mass, further preferably 10 parts by mass or less. Besides, the content of oil includes an amount of oil contained in the rubber component as an extending oil and an amount of oil contained in other components such as sulfur and the like.

· Liquid polymer

The liquid polymer is a polymer in a liquid state at 25°C, examples of which include, for example, a liquid diene-based polymer. Examples of the liquid diene-based polymer include a liquid styrene-butadiene copolymer (a liquid SBR), a liquid butadiene polymer (a liquid BR), a liquid isoprene polymer (a liquid IR), a liquid styrene-isoprene copolymer (a liquid SIR), and the like. The liquid diene-based polymer preferably has a number average molecular weight (Mn), in terms of polystyrene, as measured by gel permeation chromatography (GPC), of preferably greater than 1000, more preferably greater than 3000. On the other hand, the Mn is preferably less than 100000, more preferably less than 15000. The Mn of the liquid polymer is a value in terms of polystyrene as measured by gel permeation chromatography (GPC). As the liquid diene-based polymer, for example, products from Sartomer, Kuraray Co., Ltd., etc. can be used. The liquid polymer may be used alone, or two or more thereof may be used in combination.

· Resin

Among the above-described other compounding agents, the rubber composition preferably comprises resin. Resin is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. Among them, a C9-based resin, a C5-based resin, a C5/C9-based resin, a dicyclopentadiene-based resin, an aromatic vinyl-based resin, and a terpene-based resin are preferable. Resin may be used alone, or two or more thereof may be used in combination. Each resin component may also be used alone, respectively, or two or more thereof may be used in combination.

C9-based resin

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

C5-based resin

A "C5-based resin" refers to a resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

C5/C9-based resin

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

Dicyclopentadiene-based resin

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

Aromatic vinyl-based resin

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

Coumarone-based resin

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

Indene-based resin

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

Terpene-based resin

A "terpene-based resin" refers to a resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

Rosin-based resin

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

Phenol-based resin

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A content of resin when compounded based on 100 parts by mass of the rubber component is preferably greater than 1 part by mass, more preferably greater than 1.5 parts by mass, further preferably 2 parts by mass or more. Moreover, the content is preferably less than 20 parts by mass, more preferably less than 10 parts by mass, further preferably less than 5 parts by mass, further preferably 3 parts by mass or less.

· Ester-based plasticizing agent

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

<<Compatibilizer>>

The compatibilizer is used for the purpose of reducing a separation energy at an interface between a polymer and a filler or between different polymers and aiding in intermixing of polymers with each other. The compatibilizer is not particularly limited, and any of those conventionally used in the tire industry can be used. Specific examples of the compatibilizer include, for example: non-reactive compatibilizers such as an ethylene-propylene-styrene copolymer, a styrene-ethylene-butadiene block copolymer, a styrenemethyl methacrylate block copolymer, an ethylene-styrene graft copolymer, chlorinated polyethylene, a mixture of an aromatic hydrocarbon-based resin and an aliphatic hydrocarbon-based resin, a metal soap of an unsaturated fatty acid, and the like; and reactive compatibilizers such as a maleic anhydride graft polypropylene, a styrene-maleic anhydride copolymer, an ethylene-glycidyl methacrylate copolymer, a styrene graft copolymer onto an ethylene-glycidyl methacrylate copolymer, and the like. Among them, an ethylene-propylene-styrene copolymer is preferable. The compatibilizer may be used alone, or two or more thereof may be used in combination.

A content of a compatibilizer is not particularly limited, but in consideration of air barrier property, it is, for example, preferably greater than 3 parts by mass, more preferably greater than 4 parts by mass, further preferably 5 parts by mass or more, based on 100 parts by mass of the rubber component. On the other hand, the content is preferably less than 15 parts by mass, more preferably less than 12 parts by mass, further preferably less than 10 parts by mass.

<<Processing aid>>

Examples of processing aid include, for example, a fatty acid metal salt, a fatty acid amide, an amide ester, a silica surface active agent, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. Processing aid may be used alone, or two or more thereof may be used in combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

<<Vulcanized rubber particle>>

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle is not particularly limited and may be a non-modified vulcanized rubber particle or a modified vulcanized rubber particle. As commercially available products of vulcanized rubbers, for example, products from Lehigh Technologies, Muraoka Rubber Reclaiming Co., Ltd., etc. can be used. The vulcanized rubber particle may be used alone, or two or more thereof may be used in combination.

<<Wax>>

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

<<Stearic acid>>

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

<<Zinc oxide>>

A content of zinc oxide when compounded based on 100 parts by mass of the rubber component is preferably greater than 0.5 parts by mass, more preferably greater than 0.7 parts by mass, further preferably 1 part by mass or more, from the viewpoint of processability. On the other hand, the content is preferably less than 10 parts by mass, more preferably less than 5 parts by mass, further preferably less than 3 parts by mass, from the viewpoint of abrasion resistance.

<<Antioxidant>>

Examples of an antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenolbased antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and polymers of N-(1,3-dimethylbutyl)-N'-phenyl-p-phenylenediamine and 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

<<Vulcanizing agent>>

The vulcanizing agent is not particularly limited, and any known vulcanizing agent can be used, examples of which include, for example, an organic peroxide, a sulfur-based vulcanizing agent, a resin vulcanizing agent, metal oxide such as magnesium oxide and the like, etc. Among them, a sulfur-based vulcanizing agent is preferable. As the sulfur-based vulcanizing agent, for example, sulfur, a sulfur donor such as morpholine disulfide and the like, etc. can be used. Among them, it is preferable to use sulfur. The vulcanizing agent can be used alone, or two or more thereof can be used in combination.

Examples of sulfur include a powdered sulfur, a precipitated sulfur, a colloidal sulfur, a surface processing sulfur (an oil processing sulfur, a special sulfur processed with a dispersant, a masterbatch type sulfur, etc.), an insoluble sulfur (oil processing insoluble sulfur, etc.), and the like, any of which are appropriately used. Among them, a powdered sulfur is preferable. As sulfur, for example, those manufactured and sold by Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc., and the like can be used.

As a vulcanizing agent, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

A content of a vulcanizing agent when compounded based on 100 parts by mass of the rubber component is preferably greater than 0.4 parts by mass, more preferably 0.5 parts by mass or more, further preferably 1.0 parts by mass or more. On the other hand, the content is preferably less than 6.0 parts by mass, more preferably less than 4.0 parts by mass, further preferably less than 2.0 parts by mass. When the content of the vulcanizing agent is within the above-described ranges, an appropriate reinforcing effect tends to be obtained. Besides, when the vulcanizing agent comprises a component other than sulfur, such as oil processing sulfur and the like, a content of the vulcanizing agent means a content of the sulfur component itself.

<<Vulcanization accelerator>>

The vulcanization accelerator is not particularly limited, and any known vulcanization accelerator can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. Among them, thiazole-based, sulfenamide-based, thiuram-based, and guanidine-based vulcanization accelerators are preferable, and thiazole-based and sulfenamide-based vulcanization accelerators are more preferable. As the vulcanization accelerator, for example, those manufactured and sold by Ouchi Shinko Chemical Industry Co., Ltd., Sanshin Chemical Industry Co., Ltd., etc. can be used. The vulcanization accelerator can be used alone, or two or more thereof can be used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DZ), and the like. Examples of the thiazole-based vulcanization accelerator include 2-2'-dibenzothiazolyl disulfide and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine, and the like.

A content of a vulcanization accelerator based on 100 parts by mass of the rubber component is preferably greater than 0.3 parts by mass, more preferably greater than 0.5 parts by mass, further preferably 1.0 parts by mass or more. On the other hand, the content is preferably less than 4.0 parts by mass, more preferably less than 3.0 parts by mass, further preferably less than 2.0 parts by mass. When the content of the vulcanization accelerator is within the above-described ranges, breaking strength and elongation tend to be secured.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining compounds relating to the present embodiment from carbon dioxide, carbon dioxide may be directly converted, or methane obtained through a methanation step for synthesizing methane from carbon dioxide may be converted.

[Rubber composition constituting insulation]

A rubber composition constituting the insulation will be described. In addition to the description of the rubber composition constituting the insulation, the explanation given for the rubber composition constituting the inner liner can be similarly applied to the description of the rubber composition constituting the insulation, unless there is any contradiction between them.

<Rubber component>

The rubber composition constituting the insulation preferably comprises a diene-based rubber as a rubber component. Examples of such a diene-based rubber include, for example, an isoprene-based rubber (IR-based rubber) and a butadiene rubbers (BR). The rubber component can comprise rubber components other than the IR-based rubber and the BR, and examples of such rubber components include diene-based rubbers such as a styrene-butadiene rubber (SBR), a styrene-isoprene-butadiene rubber (SIBR), a chloroprene rubber (CR), an acrylonitrile-butadiene rubber (NBR), and the like, and non-diene-based rubbers such as a butyl-based rubber, an ethylene propylene rubber, a polynorbornene rubber, a silicone rubber, a chlorinated polyethylene rubber, a fluororubber (FKM), an acrylic rubber (ACM), a hydrin rubber, and the like. The rubber component may be one comprising an IR-based rubber and a BR, and may be one further comprising an SBR or may be one consisting of an IR-based rubber and a BR. The rubber component may be used alone, or two or more thereof may be used in combination, among those listed above.

(Isoprene-based rubber)

Examples of the isoprene-based rubber include a natural rubber (NR), an isoprene rubber (IR), a refined NR, a modified NR, a modified IR, and the like. As the NR, those common in the tire industry such as, for example, SIR20, RSS#3, TSR20, SVR-L, and the like can be used. The IR is not particularly limited, and those common in the tire industry such as, for example, IR 2200 and the like can be used. Examples of the refined NR include a deproteinized natural rubber (DPNR), an ultra pure natural rubber (UPNR), and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. The isoprene-based rubber may be used alone, or two or more thereof may be used in combination.

A content of an IR-based rubber in 100% by mass of the rubber component is preferably greater than 10% by mass, more preferably greater than 20% by mass, further preferably greater than 30% by mass, further preferably greater than 40% by mass, further preferably greater than 50% by mass, further preferably greater than 60% by mass. On the other hand, the content may be 100% by mass, but is preferably less than 90% by mass, more preferably less than 80% by mass.

(BR)

The BR is not particularly limited, examples of which include, for example, those commonly used in the tire industry, such as a BR having a high cis content, a BR containing an 1,2-syndiotactic polybutadiene crystal (SPB-containing BR), a butadiene rubber synthesized using a rare-earth elementbased catalyst (rare-earth-based BR), a tin-modified butadiene rubber modified with a tin compound (tin-modified BR), other modified butadiene rubbers (modified BR), and the like. As commercially available products of the BRs, products from UBE Corporation, JSR Corporation, Asahi Kasei Corporation, Zeon Corporation, etc. can be used. The modified BR may be any BR having a functional group that interacts with a filler such as silica and the like, examples of which include, for example, a terminal-modified BR in which at least one terminal of a BR is modified with a compound (modifying agent) having the above-described functional group (terminal-modified BR having the above-described functional group at the terminal), a main chain-modified BR having the above-described functional group at the main chain, a main chain terminal-modified BR having the above-described functional groups at the main chain and terminal (for example, a main chain terminal-modified BR having the above-described functional group at the main chain and in which at least one terminal of the BR is modified with the above-described modifying agent), a terminal-modified BR, in which a hydroxyl group or an epoxy group is introduced, modified (coupled) with a polyfunctional compound having two or more epoxy groups in a molecule, and the like. Examples of the above-described functional group include, for example, an amino group, an amide group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. Besides, these functional groups may have a substituent. Among them, an amino group (preferably an amino group in which a hydrogen atom of an amino group is substituted with an alkyl group having 1 to 6 carbon atoms), an alkoxy group (preferably an alkoxy group having 1 to 6 carbon atoms), and an alkoxysilyl group (preferably an alkoxysilyl group having 1 to 6 carbon atoms) are preferable. The BR may be used alone, or two or more thereof may be used in combination.

A cis content of a BR is preferably greater than 90 mol%, more preferably greater than 93 mol%, further preferably greater than 95 mol%, further preferably 97 mol% or more. The cis content of the BR can be measured by the above-described method.

As the BRs, for example, products from UBE Corporation, JSR Corporation, Asahi Kasei Corporation, Zeon Corporation, etc. can be used.

A content of a BR in 100% by mass of the rubber component is preferably greater than 5% by mass, more preferably greater than 10% by mass, further preferably greater than 20% by mass, further preferably greater than 25% by mass. On the other hand, the content is preferably less than 90% by mass, more preferably less than 70% by mass, further preferably less than 50% by mass, further preferably less than 40% by mass.

(SBR)

The styrene-butadiene rubber (SBR) is not particularly limited, examples of which include, for example, unmodified emulsion-polymerized styrene-butadiene rubber (E-SBR) and solution-polymerized styrene-butadiene rubber (S-SBR), as well as modified SBRs obtained by modifying them, such as a modified emulsion-polymerized styrene-butadiene rubber (modified E-SBR) and a modified solution-polymerized styrene-butadiene rubber (modified S-SBR). Examples of the modified SBR include a modified SBR modified at its terminal and/or main chain, a modified SBR coupled with tin, a silicon compound, etc. (a modified SBR of condensate or having a branched structure, etc.), and the like. Moreover, as the SBR, there are oil-extended type SBRs, in which an extending oil is added to adjust flexibility, and non-oil-extended type SBRs, in which no extending oil is added, both of which can be used. As such SBRs, for example, those manufactured by JSR Corporation, Asahi Kasei Chemicals Co., Ltd., Zeon Corporation, ZS Elastomer Co., Ltd., etc. can be used. The SBR can be used alone, or two or more thereof can be used in combination.

A styrene content of an SBR is preferably greater than 15% by mass, more preferably greater than 20% by mass, further preferably greater than 23% by mass. Moreover, the styrene content is preferably less than 40% by mass, more preferably less than 30% by mass, further preferably less than 25% by mass, from the viewpoint of fuel efficiency. Besides, the styrene content of the SBR is a value measured by the above-described method.

A vinyl content (1,2-bond butadiene unit amount) of an SBR is preferably greater than 10 mol%, more preferably greater than 15 mol%, further preferably greater than 17 mol%. Moreover, the vinyl content is preferably less than 80 mol%, more preferably less than 50 mol%, further preferably less than 30 mol%. Besides, the vinyl content of the SBR is a value measured by the above-described measuring method.

A content of an SBR in 100% by mass of the rubber component may be, for example, 0% by mass, or may be greater than 0% by mass, greater than 5% by mass, or greater than 10% by mass. On the other hand, the content may be, for example, less than 90% by mass, less than 50% by mass, or less than 30% by mass.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained by, for example, decomposing a rubber product such as a tire and the like under high temperature and pressure, by decomposing it by microwaves, or by extruding it after mechanically pulverizing it.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like. The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a polybutadiene rubber synthesized from a biomass-derived butadiene, an aromatic vinyl/-butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$

concentration in a circulating carbon in nature as of 1950 is adopted as the modern standard reference for the $^{14}$C concentration. As a specific reference material, an oxalic acid standard body provided by NIST (National Institute of Standards and Technology) is used. A specific radioactivity of carbon in this oxalic acid (radioactivity intensity of $^{14}$C per gram of carbon) is sorted for each carbon isotope, $^{13}$C is corrected to a constant value, and a value corrected for attenuation from 1950 to the date of measurement is used as a standard $^{14}$C concentration value (100%). A ratio of this value to a value actually measured for a sample becomes a pMC value.

Thus, if a rubber is produced from a material derived from 100% biomass, the $^{14}$C concentration shows a value of approximately 110 pMC as, currently, under a normal condition, it often does not reach 100, though there are regional differences and the like. On the other hand, if this $^{14}$C concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

(Filler)

A filler comprises carbon black. Moreover, the carbon black comprises a recovered carbon black (rCB). Furthermore, the filler may comprise fillers other than carbon black, and examples of such fillers include those conventionally and commonly used in the tire industry such as aluminum hydroxide, calcium carbonate, alumina, clay, talc, and the like, in addition to silica. The filler may be one comprising carbon black and silica, may be one consisting of carbon black and silica, or may be one consisting of carbon black. The explanation given for the inner liner can be similarly applied to other explanations for the filler.

(Other compounding agents)

The rubber composition can appropriately comprise compounding agents conventionally and commonly used in the tire industry, for example, a plasticizing agent, a compatibilizer, processing aid, a vulcanized rubber particle, wax, stearic acid, zinc oxide, an antioxidant, a vulcanizing agent, a vulcanization accelerator, and the like, in addition to the rubber components and the fillers. The explanation given for the rubber composition for inner liner can be similarly applied to these compounding agents.

[Rubber composition constituting tire member other than inner liner and insulation]

The explanation given for the rubber composition constituting the insulation can be similarly applied to a rubber composition constituting a tire member other than the inner liner and the insulation.

<Producing method>

The tire relating to the present embodiment can be produced by a known method.

(Production of rubber composition)

Each of the above-described rubber compositions can be produced by a known method. For example, it can be produced by kneading each of the above-described components using a rubber kneading apparatus such as an open roll, a closed type kneader (Bunbury mixer, kneader, etc.), and the like. The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. Examples of a kneading condition include, but not particularly limited to, for example, in the base kneading step, a method of kneading at a discharge temperature from 130 to 170°C for 3 to 10 minutes, and in the final kneading step, a method of kneading at 50 to 110°C for 1 to 5 minutes.

(Production of tire)

Each of the rubber compositions obtained above is extruded into a desired shape of a tire member, respectively, at an unvulcanized stage. The tire member is at least one selected from the group consisting of, for example, a tread, a full band, a belt, a carcass, an insulation, an inner liner, a sidewall, a clinch, a wing, and the like. The tire member thus obtained can be molded together with other tire members on a tire molding machine by a usual method, thereby allowing for production of an unvulcanized tire. The tire of the present embodiment can be produced by heating and pressurizing (vulcanizing) this unvulcanized tire in a vulcanizer. Examples of a vulcanization condition include, but not particularly limited to, for example, a method of vulcanizing at 150 to 200°C for 5 to 30 minutes.

<Application>

In the present specification, the tire can be used for any applications, regardless of whether it is a pneumatic tire or a non-pneumatic tire, and can be used as a tire for a passenger car, a tire for a large passenger car, a tire for a large SUV, a racing tire, a motorcycle tire, a heavy duty tire, or a run flat tire. Besides, the tire for a passenger car is a tire on the premise that it is mounted on a car running on four wheels and refers to one having a maximum load capacity of less than 1400 kg. Moreover, the heavy-duty tire refers to a tire with a maximum load capacity of 1400 kg or more. Moreover, in the present specification, the tire can be used as an all-season tire, a summer tire, or a winter tire such as a studless tire and the like.

EXAMPLES

Examples considered to be preferable in implementation (Examples) are shown below, though the scope of the present invention is not limited to Examples. Results calculated based on the following evaluation methods considering a tire obtained according to each Table using various chemicals shown below are shown as durability indexes in the lower part of each Table.

<Various chemicals>

Various chemicals used in Examples and Comparative examples are collectively described below.

Butyl-based rubber 1: Chlorinated butyl rubber (CIIR 1066, manufactured by ENEOS Materials Corporation)
Butyl-based rubber 2: Brominated butyl rubber (IIR 2222, manufactured by ENEOS Materials Corporation)
IR-based rubber: Natural rubber (SVR-L)
BR: Butadiene rubber (BR150B, manufactured by UBE Corporation, cis content: 97 mol%, vinyl content: 1 mol%)
SBR: Emulsion-polymerized styrene-butadiene rubber (ESBR1502, manufactured by ENEOS Materials Corporation, styrene content: 23.5% by mass, vinyl content: 18 mol%, non-oil-extended product)
rCB1: Recovered carbon black (average primary particle size: 45 nm, ash content: 13% by mass or more)
rCB2: Recovered carbon black (average primary particle size: 55 nm, ash content: 13% by mass or more)
rCB3: Recovered carbon black (average primary particle size: 30 nm, ash content: 13% by mass or more)
rCB4: Recovered carbon black (average primary particle size: 50 nm, ash content: 13% by mass or more)
CB: Carbon black (N550, average primary particle size: 44 nm, ash content: less than 13% by mass)
Oil: Aromatic process oil (Diana Process NH-70S, manufactured by Idemitsu Kosan Co., Ltd.)
Zinc oxide: Zinc oxide No. 2 (manufactured by Mitsui Mining & Smelting Co., Ltd.)
Stearic acid: Bead stearic acid "CAMELLIA" (manufactured by NOF CORPORATION)
Resin: C5/C9-based resin (Petrotack 100V, manufactured by Tosoh Corporation, softening point: 96°C)
Compatibilizer: Ethylene-propylene-styrene copolymer (Promix 400, manufactured by Flow Polymers Inc.)
Sulfur: HK-200-5 (powdered sulfur, manufactured by Hosoi Chemical Industry Co., Ltd., oil content: 5% by mass)
Vulcanization accelerator 1: Nocceler DM (2,2'-dibenzothiazolyl disulfide, manufactured by Ouchi Shinko Chemical Industry Co., Ltd.)
Vulcanization accelerator 2: Nocceler CZ (N-cyclohexyl-2-benzothiazole sulfenamide, manufactured by Ouchi Shinko Chemical Industry Co., Ltd.)

<Rubber composition for inner liner and tire>

According to the compounding formulations shown in Tables 1 and 2, using a 1.7 L closed Banbury mixer, all chemicals other than sulfur and vulcanization accelerators are kneaded until a temperature reaches a discharge temperature at 130°C for 4 minutes to obtain a kneaded product. Next, using a twin-screw open roll, sulfur and vulcanization accelerators are added to the obtained kneaded product, and the mixture is kneaded for 4 minutes until the temperature reaches 80°C to obtain an unvulcanized rubber composition for inner liner.

According to the descriptions in Tables 1 and 2, the unvulcanized rubber composition for inner liner is molded into a shape of an inner liner, which is further attached together with other tire members, forming an unvulcanized tire, and the unvulcanized tire is press-vulcanized under a condition of 170°C for 12 minutes to produce each test tire (size: 195/65R15).

<Rubber composition for insulation and tire>

According to the compounding formulations shown in Tables 3 and 4, using a 1.7 L closed Banbury mixer, all chemicals other than sulfur and vulcanization accelerators are kneaded at a discharge temperature of 150°C for 5 minutes. Next, sulfur and vulcanization accelerators are added to the obtained kneaded product, and the mixture is kneaded for 4 minutes until the temperature reaches 105°C using an open roll to obtain an unvulcanized rubber composition for insulation.

According to the descriptions in Tables 3 and 4, the unvulcanized rubber composition for insulation is molded into a shape of an insulation, which is further attached together with other tire members, forming an unvulcanized tire, and the unvulcanized tire is press-vulcanized under a condition of 170°C for 12 minutes to produce each test tire (size: 195/65R15).

<Durability>

Each test tire is incorporated into a standardized rim and filled with air. This tire is mounted on a drum type running tester and applied with a predetermined load. The tire is made to run on a drum at a predetermined speed, and a running distance until a change occurs in the inner liner or the insulation is measured. The results are indicated as indexes with a running distance in the reference Comparative example being as 100, which show that the larger the numerical value is, the better the durability is.

Table 1

(Tire member: Inner liner)

| | Example | Comparative example | | |
|---|---|---|---|---|
| | 1-1 | 1-1 | 1-2 | 1-3 |
| Compounding (part by mass) | | | | |
| Butyl-based rubber 1 | 100 | 100 | 100 | 100 |
| rCB1 (particle size: 45 nm) | 80 | - | 80 | - |
| rCB2 (particle size: 55 nm) | - | 80 | - | 80 |
| Oil | 3 | 3 | 3 | 3 |
| Zinc oxide | 1 | 1 | 1 | 1 |
| Stearic acid | 1 | 1 | 1 | 1 |
| Resin | 3 | 3 | 3 | 3 |
| Compatibilizer | 5 | 5 | 5 | 5 |
| Sulfur | 0.5 | 0.5 | 0.5 | 0.5 |
| Vulcanization accelerator 1 | 1.25 | 1.25 | 1.25 | 1.25 |
| Content of CB (part by mass) $[A_{CB}]$ | 80 | 80 | 80 | 80 |
| Average primary particle size of CB (nm) $[D_{CB}]$ | 45.0 | 55.0 | 45.0 | 55.0 |
| Maximum thickness of tire member (mm) $[T]$ | 1.00 | 1.00 | 0.75 | 0.75 |
| Inequality (1) $(A_{CB} \times D_{CB})/T$ | 3600 | 4400 | 4800 | 5867 |
| Durability index | 108 | 100 | 98 | 92 |

Table 2

(Tire member: Inner liner)

| | Example | | Comparative example |
|---|---|---|---|
| | 2-1 | 2-2 | 2-1 |
| Compounding (part by mass) | | | |
| Butyl-based rubber 2 | 100 | 100 | 100 |
| rCB2 (particle size: 55 nm) | - | - | 70 |
| rCB3 (particle size: 30 nm) | - | 40 | - |
| rCB4 (particle size: 50 nm) | 40 | - | - |
| CB (particle size: 44 nm) | 40 | 40 | 10 |

(continued)

(Tire member: Inner liner)

| | Example | | Comparative example |
|---|---|---|---|
| | 2-1 | 2-2 | 2-1 |
| Compounding (part by mass) | | | |
| Oil | 3 | 3 | 3 |
| Zinc oxide | 1 | 1 | 1 |
| Stearic acid | 1 | 1 | 1 |
| Resin | 3 | 3 | 3 |
| Compatibilizer | 5 | 5 | 5 |
| Sulfur | 0.5 | 0.5 | 0.5 |
| Vulcanization accelerator 1 | 1.25 | 1.25 | 1.25 |
| Content of CB (part by mass) [$A_{CB}$] | 80 | 80 | 80 |
| Average primary particle size of CB (nm) [$D_{CB}$] | 47.0 | 37.0 | 53.6 |
| Maximum thickness of tire member (mm) [T] | 1.00 | 1.00 | 1.00 |
| Inequality (1) ($A_{CB} \times D_{CB}$)/T | 3760 | 2960 | 4290 |
| Durability index | 111 | 117 | 100 |

Table 3

(Tire member: Insulation)

| | Example | Comparative example | | |
|---|---|---|---|---|
| | 3-1 | 3-1 | 3-2 | 3-3 |
| Compounding (part by mass) | | | | |
| IR-based rubber | 70 | 70 | 70 | 70 |
| BR | 30 | 30 | 30 | 30 |
| rCB1 (particle size: 45 nm) | 80 | - | 80 | - |
| rCB2 (particle size: 55 nm) | - | 80 | - | 80 |
| Oil | 10 | 10 | 10 | 10 |
| Zinc oxide | 2 | 2 | 2 | 2 |
| Stearic acid | 2 | 2 | 2 | 2 |
| Resin | 2 | 2 | 2 | 2 |
| Sulfur | 1.6 | 1.6 | 1.6 | 1.6 |
| Vulcanization accelerator 2 | 1 | 1 | 1 | 1 |
| Content of CB (part by mass) [$A_{CB}$] | 80 | 80 | 80 | 80 |
| Average primary particle size of CB (nm) [$D_{CB}$] | 45.0 | 55.0 | 45.0 | 55.0 |
| Maximum thickness of tire member (mm) [T] | 1.00 | 1.00 | 0.75 | 0.75 |
| Inequality (1) ($A_{CB} \times D_{CB}$)/T | 3600 | 4400 | 4800 | 5867 |
| Durability index | 110 | 100 | 98 | 90 |

Table 4

(Tire member: Insulation)

| | Example | | Comparative example |
|---|---|---|---|
| | 4-1 | 4-2 | 4-1 |
| Compounding (part by mass) | | | |
| IR-based rubber | 70 | 70 | 70 |
| SBR | 30 | 30 | 30 |

(continued)

(Tire member: Insulation)

| | Example | | Comparative example |
|---|---|---|---|
| | 4-1 | 4-2 | 4-1 |
| Compounding (part by mass) | | | |
| rCB2 (particle size: 55 nm) | - | - | 70 |
| rCB3 (particle size: 30 nm) | 40 | 70 | - |
| CB (particle size: 44 nm) | 40 | 40 | 10 |
| Oil | 10 | 10 | 10 |
| Zinc oxide | 2 | 2 | 2 |
| Stearic acid | 2 | 2 | 2 |
| Resin | 2 | 2 | 2 |
| Sulfur | 1.6 | 1.6 | 1.6 |
| Vulcanization accelerator 2 | 1 | 1 | 1 |
| Content of CB (part by mass) [$A_{CB}$] | 80 | 110 | 80 |
| Average primary particle size of CB (nm) [$D_{CB}$] | 37.0 | 35.1 | 53.6 |
| Maximum thickness of tire member (mm) [T] | 1.00 | 1.00 | 1.00 |
| Inequality (1) ($A_{CB} \times D_{CB}$)/T | 2960 | 3860 | 4290 |
| Durability index | 126 | 105 | 100 |

<Embodiments>

Preferred embodiments are shown below.

[1] A tire comprising a tire member composed of a rubber composition,

the rubber composition comprising a rubber component and carbon black,
the carbon black having an average primary particle size of 50.0 nm or less, preferably less than 50.0 nm, more preferably less than 48.0 nm,
the carbon black comprising a recovered carbon black,
wherein $A_{CB}$, $D_{CB}$, and T satisfy the following inequality, preferably the right side in the following inequality being 4000, more preferably 3800, further preferably 3700, further preferably 3500, where $A_{CB}$ represents a content, in parts by mass, of the carbon black based on 100 parts by mass of the rubber component, $D_{CB}$ represents an average primary particle size, in nm, of the carbon black, and T represents the maximum thickness, in mm, of the tire member:

$$(1)\ (A_{CB} \times D_{CB})/T < 4500.$$

[2] The tire of [1] above, wherein the right side in the inequality (1) is 3000, preferably 2800, more preferably 2600.
[3] The tire of [1] or [2] above, wherein the $A_{CB}$ is 20 or more and 100 or less, preferably greater than 20 parts by mass and less than 100 parts by mass, more preferably greater than 30 parts by mass and less than 100 parts by mass, further preferably greater than 40 parts by mass and less than 100 parts by mass, further preferably greater than 50 parts by mass and less than 100 parts by mass, further preferably greater than 60 parts by mass and less than 100 parts by mass, further preferably greater than 70 parts by mass and less than 100 parts by mass.
[4] The tire of any one of [1] to [3] above, wherein the $D_{CB}$ is 47.0 nm or less, preferably less than 46.0 nm, more preferably less than 45.0 nm, further preferably less than 40.0 nm, further preferably less than 39.0 nm, further preferably less than 38.0 nm, further preferably less than 37.0 nm, further preferably less than 36.0 nm, further preferably less than 35.0 nm, further preferably less than 32.0 nm.
[5] The tire of any one of [1] to [4] above, wherein the tire member is an inner liner.
[6] The tire of any one of [1] to [4] above, wherein the tire member is an insulation.

REFERENCE SIGNS LIST

1. Tire
2. Insulation
3. Inner liner
4. Sidewall
5. Clinch
6. Wing
T2. Thickness of insulation
T3. Thickness of inner liner
T4. Thickness of sidewall
T5. Thickness of clinch
T6. Thickness of wing
P1. Point where sidewall and clinch come into contact with each other on outer surface of tire
L1. Normal line of main body of carcass
P2. Point where contour line of tread on outer side in tire width direction intersects with contour line of sidewall on outer side in tire radial direction
L2. Normal line of outer surface of tire
CL. Tire center line
R. Rim

**Claims**

1.  A tire comprising a tire member composed of a rubber composition,

    the rubber composition comprising a rubber component and carbon black,
    the carbon black having an average primary particle size of 50.0 nm or less,
    the carbon black comprising a recovered carbon black,
    wherein $A_{CB}$, $D_{CB}$, and T satisfy the following inequality, where $A_{CB}$ represents a content, in parts by mass, of the carbon black based on 100 parts by mass of the rubber component, $D_{CB}$ represents an average primary particle size, in nm, of the carbon black, and T represents the maximum thickness, in mm, of the tire member:

$$(1)\ (A_{CB} \times D_{CB})/T < 4500.$$

2.  The tire of claim 1, wherein the right side in the inequality (1) is 3000.

3.  The tire of claim 1 or 2, wherein the $A_{CB}$ is 20 or more and 100 or less.

4.  The tire of any one of claims 1 to 3, wherein the $D_{CB}$ is 47.0 nm or less.

5.  The tire of any one of claims 1 to 4, wherein the tire member is an inner liner.

6.  The tire of any one of claims 1 to 4, wherein the tire member is an insulation.

# FIG. 1

Europäisches
Patentamt

European
Patent Office

Office européen
des brevets

## EUROPEAN SEARCH REPORT

**Application Number**

EP 25 16 4414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 166 353 A1 (SUMITOMO RUBBER IND [JP]) 19 April 2023 (2023-04-19) * claims; examples * ----- | 1-6 | INV. B60C1/00 C08L7/00 C08L23/283 |
| A | EP 4 180 240 A1 (SUMITOMO RUBBER IND [JP]) 17 May 2023 (2023-05-17) * paragraphs [0091] - [0096]; claims; examples * ----- | 1-6 | |
| A | EP 4 311 687 A1 (SUMITOMO RUBBER IND [JP]) 31 January 2024 (2024-01-31) * the whole document * ----- | 1-6 | |

| | | | |
|---|---|---|---|
| | | | TECHNICAL FIELDS SEARCHED (IPC) |
| | | | B60C C08L |

The present search report has been drawn up for all claims

| Place of search | Date of completion of the search | Examiner |
|---|---|---|
| Munich | 7 August 2025 | Reisbeck, Felix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 4414

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2025

| Patent document cited in search report | | Publication date | Patent family member(s) | | Publication date |
|---|---|---|---|---|---|
| EP 4166353 | A1 | 19-04-2023 | CN | 115991896 A | 21-04-2023 |
| | | | EP | 4166353 A1 | 19-04-2023 |
| EP 4180240 | A1 | 17-05-2023 | CN | 116102796 A | 12-05-2023 |
| | | | EP | 4180240 A1 | 17-05-2023 |
| EP 4311687 | A1 | 31-01-2024 | EP | 4311687 A1 | 31-01-2024 |
| | | | JP | 2024015858 A | 06-02-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3173251 A
- EP 3427975 A

- JP 6856781 B
- JP 2009002594 A

**Non-patent literature cited in the description**

- *Rubber Chemistry and Technology*, 2012, vol. 85 (3), 408-449
- *Powder Technology*, 2005, vol. 160, 190-193

- *Akita Prefectural University Web Journal B*, 2019, vol. 6, 216-222